# EUROPÄISCHE PATENTSCHRIFT

(11) **EP 3 287 611 B1**
(45) Veröffentlichungstag und Bekanntmachung des Hinweises auf die Patenterteilung: **01.07.2020**
(21) Anmeldenummer: 17187224.5
(22) Anmeldetag: 22.08.2017
(51) Int. Cl.: F01D 25/24

(54) **GASTURBINE**
GAS TURBINE
TURBINE À GAZ

(30) Priorität: 23.08.2016 DE 102016115610
(43) Veröffentlichungstag der Anmeldung: 28.02.2018
(73) Patentinhaber: Rolls-Royce Deutschland Ltd & Co KG, 15827 Blankenfelde-Mahlow (DE)
(72) Erfinder: SCHIEßL, Thomas, 15827 Blankenfelde-Mahlow (DE)
(74) Vertreter: Müller, Wolfram Hubertus

(56) Entgegenhaltungen:
- EP-A2- 2 278 125
- DE-A1-102005 045 459
- DE-T5-112012 006 864
- US-A1- 2009 129 917
- US-B1- 6 425 738

## Beschreibung

Die Erfindung betrifft eine Gasturbine gemäß dem Oberbegriff des Patentanspruchs 1 und ein Verfahren zum Aufhängen eines Turbinen-Leitschaufelsegments einer Gasturbine.

Es ist bekannt, die Turbinen-Leitschaufelsegmente der Stufe 1, die den ersten der Brennkammer nachgeordneten Leitschaufelkranz der Hochdruckturbine einer Gasturbine bilden, in radialer Richtung und in Umfangsrichtung am Brennkammer-Innengehäuse und damit an einer Struktur zu fixieren, die radial innen zum Hauptströmungspfad durch die Gasturbine liegt. Dies führt dazu, dass die Turbinen-Leitschaufelsegmente mit einem relativ großen radialen Spiel zum Gehäuse der Hochdruckturbine aufgehängt sein müssen, an dem angrenzende Strukturen der Hochdruckturbine ausgebildet oder angeordnet sind, die den Hauptströmungspfad in diesem Bereich gemeinsam mit den Turbinen-Leitschaufelsegmenten radial außen begrenzen. So besteht aufgrund der Fixierung der Turbinen-Leitschaufelsegmente am Brennkammer-Innengehäuse eine sich ergebende lange Toleranzkette, die über das Brennkammer-Innengehäuse und einen Hochdruckverdichter-Austrittsleitkranz mit Diffusor zum Brennkammer-Außengehäuse und von diesem zum Gehäuse der Hochdruckturbine führt. Diese Toleranzkette und unterschiedliche Thermaldehnungen führen zu radialen Relativbewegungen an der radial äußeren Begrenzung des Hauptströmungspfades, für die ein entsprechender Bauraum vorgesehen werden muss.

Für den Fall, dass der dem Turbinen-Leitschaufelkranz nachgeordnete Laufschaufelkranz Laufschaufeln aufweist, die ohne Deckband ausgebildet sind, besteht das damit verbundene Problem, dass an der radial äußeren Begrenzung des Hauptströmungspfades zwischen den Turbinen-Leitschaufelsegmenten und einer am Gehäuse der Hochdruckturbine befestigten radial äußeren Begrenzung des Hauptströmungspfades eine Stufe besteht, die nur für einen Betriebspunkt optimiert werden kann und darüber hinaus der genannten relativ langenToleranzkette unterliegt.

Aus der EP 2 278 125 A2 ist eine gattungsgemäße Gasturbine bekannt.

Die DE 11 2012 006 864 T5 beschreibt eine Gasturbine mit einer Brennkammer und einem der Brennkammer nachgeordneten Turbinen-Leitschaufelkranz, der aus einzelnen Segmenten besteht, die jeweils eine Leitschaufel, eine äußere Plattform und eine innere Plattform umfassen. Die Turbinen-Leitschaufelsegmente sind in radialer Richtung über eine Flanschverbindung mit einer äußeren Struktur verbunden.

Die DE 10 2005 045 459 A1 beschreibt, Turbinen-Leitschaufelsegmente in radialer Richtung an einem Außengehäuse und in axialer Richtung an einem Brennkammer-Innengehäuse zu fixieren.

Die US 6 425 738 B1 beschreibt eine Gasturbine mit einer Brennkammer, an die sich eine Hochdruckturbine anschließt. Die Hochdruckturbine besteht aus einer Vielzahl von Leitschaufelsegmenten. Diese sind über einen äußeren Flansch an einem Gehäuse befestigt.

Die US 2009/0129917 A1 offenbart ein Leitschaufelsegment für eine Niederdruckturbine, das in radialer Richtung an einem Außengehäuse befestigt ist.

Der Erfindung liegt die Aufgabe zu Grunde, eine Gasturbine bereitzustellen, durch die Toleranzen zwischen dem Leitschaufelkranz der Stufe 1 und angrenzenden Strukturen reduziert werden.

Diese Aufgabe wird durch eine Gasturbine mit den Merkmalen des Anspruchs 1 gelöst. Ausgestaltungen der Erfindung sind in den Unteransprüchen angegeben.

Danach betrifft die Erfindung eine Gasturbine, die eine Brennkammer und eine Hochdruckturbine mit einem der Brennkammer nachgeordneten ersten Turbinen-Leitschaufelkranz aufweist. Der Turbinen-Leitschaufelkranz weist eine Mehrzahl von Turbinen-Leitschaufelsegmenten auf, die jeweils mindestens eine Leitschaufel, eine innere Plattform und eine äußere Plattform umfassen. Die Gasturbine weist des Weiteren ein Außengehäuse auf. Es ist vorgesehen, dass die Turbinen-Leitschaufelsegmente in radialer Richtung am Außengehäuse fixiert sind, wobei auftretende radiale Lasten in das Außengehäuse geleitet werden.

Es ist somit vorgesehen, die Turbinen-Leitschaufelsegmente nicht am Brennkammer-Innengehäuse, sondern stattdessen an einem Außengehäuse der Gasturbine in radialer Richtung zu fixieren. Radiale Kräfte werden dementsprechend direkt in das Außengehäuse eingeleitet. Hierdurch werden thermale Relativbewegungen und Toleranzen an der radial äußeren Begrenzung des Hauptströmungspfads durch die Gasturbine auf ein Minimum reduziert. Denn die Turbinen-Leitschaufelsegmente und die im Hauptströmungspfad daran angrenzenden Komponenten und Strukturen der Hochdruckturbine sind gemäß der Erfindung an der gleichen Struktur, nämlich dem Außengehäuse in radialer Richtung fixiert.

Ein weiterer mit der Erfindung verbundener Vorteil besteht darin, dass Bauraum im Randbereich einer Turbinenscheibe gewonnen werden kann, die die Laufschaufeln der Stufe 1 der Hochdruckturbine trägt und die in geringem axialen Abstand zur inneren Plattform der Turbinen-Leitschaufelsegmente angeordnet ist. Denn die im Stand der Technik bekannte radiale Fixierung der Turbinen-Leitschaufelsegmente am Brennkammer-Innengehäuse erfolgte durch Strukturen im Bereich der inneren Plattform der Turbinen-Leitschaufelsegmente. Ein solcher zusätzlicher Bauraum kann beispielsweise dafür genutzt werden, um Vordralldüsen zur Kühlung der Turbinenscheibe vorzusehen.

Das Außengehäuse der Gasturbine, an dem die Turbinen-Leitschaufelsegmente fixiert sind, ist durch ein Turbinengehäuse der Hochdruckturbine und ein Brennkammer-Außengehäuse der Brennkammer gebildet, die miteinander verbunden sind.

Gemäß einer Ausgestaltung der Erfindung ist vorgesehen, dass die Turbinen-Leitschaufelsegmente in axialer Richtung sowohl am Außengehäuse der Hochdruckturbine als auch an einem Brennkammer-Innengehäuse der Brennkammer abgestützt sind, wobei auftretende axiale Lasten sowohl in das Außengehäuse als auch in das Brennkammer-Innengehäuse geleitet werden. Es verhält sich dementsprechend so, dass nur die Fixierung der Turbinen-Leitschaufelsegmente in radialer Richtung (und gegebenenfalls in Umfangsrichtung, wie noch erläutert werden wird) allein am Außengehäuse erfolgt. Die gesondert von der radialen Fixierung erfolgende Fixierung der Turbinen-Leitschaufelsegmente in axialer Richtung erfolgt dagegen sowohl an Strukturen des Außengehäuses (oder an Strukturen, die mit dem Außengehäuse verbunden sind) als auch an Strukturen des Brennkammer-Innengehäuses (oder an Strukturen, die mit dem Brennkammer-Innengehäuse verbunden sind).

Die Fixierung in axialer Richtung erfolgt dabei beispielsweise durch eine Abstützung, d.h. ein axial angrenzendes Element, das eine axiale Bewegung verhindert. Alternativ erfolgt eine axiale Fixierung beispielsweise durch eine Nut-Finger Verbindung.

Auftretende axiale Lasten werden gemäß diesem Ausführungsbeispiel somit sowohl in das Außengehäuse als auch in das Brennkammer-Innengehäuse abgeleitet. Dies ist mit dem Vorteil verbunden, dass axiale Lasten besser verteilt werden.

Eine weitere Ausgestaltung der Erfindung sieht vor, dass ein Turbinen-Leitschaufelsegment an seiner inneren Plattform eine sich in radialer Richtung nach innen erstreckende Struktur ausbildet, die eine sich in Umfangsrichtung erstreckende Dichtkante umfasst, wobei die sich in radialer Richtung nach innen erstreckende Struktur in einer sich in radialer Richtung erstreckenden Aussparung einer Struktur des Brennkammer-Innengehäuses angeordnet und in dieser in radialer Richtung verschiebbar angeordnet ist, wobei die sich in radialer Richtung erstreckende Aussparung einen axialen Anschlag des Brennkammer-Innengehäuses für die Dichtkante der Struktur und damit für das Turbinen-Leitschaufelsegment bildet. Diese Ausgestaltung stellt zum einen sicher, dass die Turbinen-Leitschaufelsegmente, die in radialer Richtung am Außengehäuse fixiert sind, gegenüber dem Brennkammer-Innengehäuse radial verschiebbar sind, so dass noch vorhandene radiale Toleranzen aufgenommen werden können. Zum anderen wird durch diese Ausgestaltung in einfacher Weise ein axialer Anschlag zur axialen Abstützung der Turbinen-Leitschaufelsegmente gegenüber dem Brennkammer-Innengehäuse bereitgestellt.

Eine weitere Ausgestaltung sieht vor, dass ein Turbinen-Leitschaufelsegment an seiner äußeren Plattform sich axial an einer Struktur abstützt, die die äußere Begrenzung des Hauptströmungspfads für die Laufschaufeln eines dem ersten Turbinen-Leitschaufelkranz nachgeordneten ersten Turbinen-Laufschaufelkranzes bereitstellt. Diese Struktur ist beispielsweise ein Deckbandsegment, das zum Hauptströmungspfad hin ein Anlaufmaterial für die Laufschaufeln des dem ersten Turbinen-Leitschaufelkranz nachgeordneten ersten Turbinen-Laufschaufelkranzes bereitstellt.

Dabei kann vorgesehen sein, dass ein Turbinen-Leitschaufelsegment an seiner äußeren Plattform eine sich in radialer Richtung nach außen erstreckende Struktur ausbildet, die eine sich in Umfangsrichtung erstreckende, sich axial abstützende Dichtkante aufweist. Die Dichtkante kann sich beispielsweise an der eben genannten Struktur oder alternativ an einer Struktur des Außengehäuses oder alternativ an einem mit dem Außengehäuse verbundenen Unterstützungsring abstützen.

Gemäß einer Ausgestaltung der Erfindung ist vorgesehen, dass die Turbinen-Leitschaufelsegmente in radialer Richtung und in Umfangsrichtung am Außengehäuse fixiert sind, wobei auftretende radiale und tangentiale Lasten in das Außengehäuse geleitet werden. Dabei kann vorgesehen sein, dass zumindest teilweise die gleichen Fixierungsmittel für die radiale Fixierung und die Fixierung in Umfangsrichtung eingesetzt werden.

Zur Fixierung der Turbinen-Leitschaufelsegmente in radialer Richtung am Außengehäuse ist erfindungsgemäß vorgesehen, dass die Turbinen-Leitschaufelsegmente in radialer Richtung jeweils über mindestens einen Haken am Turbinengehäuse fixiert sind. Hierzu sind die Haken jeweils in einer axialen Nut des Turbinengehäuses angeordnet.

Gemäß der Erfindung ist weiter vorgesehen, dass die genannte Nut des Turbinengehäuses des Weiteren der radialen Fixierung einer Struktur dient, die stromabwärts des ersten Turbinen-Leitschaufelkranzes angeordnet ist und die äußere Begrenzung des Hauptströmungspfads für die Laufschaufeln eines dem ersten Turbinen-Leitschaufelkranz nachgeordneten ersten Turbinen-Laufschaufelkranzes bereitstellt. Diese Struktur bildet beispielsweise ein Deckbandsegment der äußeren Hauptströmungspfadberandung.

Bei Fixierung eines Turbinen-Leitschaufelsegments in radialer Richtung jeweils über mindestens einen Haken kann eine Fixierung des Turbinen-Leitschaufelsegments im Umfangsrichtung über einen oder mehrere Stifte erfolgen. Die genannte Struktur, die stromabwärts des ersten Turbinen-Leitschaufelkranzes angeordnet ist und die äußere Begrenzung des Hauptströmungspfads für die Laufschaufeln eines dem ersten Turbinen-Leitschaufelkranz nachgeordneten ersten Turbinen-Laufschaufelkranzes bereitstellt, kann sich dabei an den Seitenflächen der Haken des Turbinen-Leitschaufelsegments in Umfangsrichtung abstützen.

Allgemein gilt, dass die Mittel (Stifte, Haken) zur Fixierung der Turbinen-Leitschaufelsegmente in radialer Richtung am Außengehäuse an einer Struktur ausgebildet sein können, die sich an der äußeren Plattform in radialer Richtung nach außen erstreckt.

Die vorliegende Erfindung stellt eine Aufhängung von Turbinen-Leitschaufelsegmenten unabhängig davon bereit, in welcher Weise der Laufschaufelkranz der Stufe 1 ausgebildet ist, der sich in Strömungsrichtung an den Turbinen-Leitschaufelkranz anschließt. Grundsätzlich kann dieser Laufschaufelkranz sowohl in einer Ausführung mit Deckband als auch in einer Ausführung ohne Deckband realisiert sein. Eine Ausgestaltung der Erfindung sieht vor, dass die Laufschaufeln des Laufschaufelkranzes, der dem ersten Turbinen-Leitschaufelkranz nachgeordnet ist, ohne Deckband ausgebildet sind. Bei einer solchen Ausgestaltung besteht in besonderem Maße die Gefahr der Ausbildung einer radialen Stufe zwischen dem Turbinen-Leitschaufelkranz und der in axialer Richtung dazu angrenzenden Struktur, die ein Anlaufmaterial zum Hauptströmungspfad hin bereitstellt. Durch ein solches Anlaufmaterial kann ein Spalt der Schaufelspitzen zur äußeren Begrenzung des Hauptströmungspfads minimiert werden.

Die Erfindung wird nachfolgend unter Bezugnahme auf die Figuren der Zeichnung anhand mehrerer Ausführungsbeispiele näher erläutert. Es zeigen:
- Figur 1: eine vereinfachte schematische Schnittdarstellung eines Turbofantriebwerks, in dem die vorliegende Erfindung realisierbar ist;
- Figur 2a: eine Darstellung eines Turbinen-Leitschaufelsegments eines Leitschaufelkranzes der Stufe 1 einer Hochdruckturbine gemäß dem Stand der Technik, das angrenzend an die Brennkammer im Hauptströmungspfad realisiert ist;
- Figur 2b: eine Darstellung der radialen Fixierung des Turbinen-Leitschaufelsegments der Figur 2a im Bereich seiner inneren Plattform an einem Brennkammer-Innengehäuse über zwei Stifte;
- Figur 3a: ein Beispiel eines Turbinen-Leitschaufelsegments eines Schaufelkranzes der Stufe 1 einer Hochdruckturbine, wobei das Turbinen-Leitschaufelsegment direkt an einem Brennkammer-Außengehäuse radial fixiert ist;
- Figur 3b: ein weiteres Beispiel eines Turbinen-Leitschaufelsegments eines Schaufelkranzes der Stufe 1 einer Hochdruckturbine, wobei das Turbinen-Leitschaufelsegment ebenfalls direkt an einem Brennkammer-Außengehäuse radial fixiert ist;
- Figur 3c: ein Ausführungsbeispiel eines Turbinen-Leitschaufelsegments eines Schaufelkranzes der Stufe 1 einer Hochdruckturbine, wobei das Turbinen-Leitschaufelsegment direkt an einem Turbinengehäuse radial fixiert ist;
- Figur 4: ein weiteres Beispiel eines Turbinen-Leitschaufelsegments eines Schaufelkranzes der Stufe 1 einer Hochdruckturbine, wobei das Turbinen-Leitschaufelsegment über einen geschlitzten Leitschaufel-Unterstützungsring an einem Turbinengehäuse radial fixiert ist;
- Figur 5: ein weiteres Beispiel eines Turbinen-Leitschaufelsegments eines Schaufelkranzes der Stufe 1 einer Hochdruckturbine, wobei das Turbinen-Leitschaufelsegment über einen nicht geschlitzten Leitschaufel-Unterstützungsring an einem Turbinengehäuse radial fixiert ist;
- Figur 6: ein weiteres Beispiel eines Turbinen-Leitschaufelsegments eines Schaufelkranzes der Stufe 1 einer Hochdruckturbine, wobei das Turbinen-Leitschaufelsegment über einen geschlitzten Leitschaufel-Unterstützungsring an einem Turbinengehäuse radial fixiert ist, der zusätzlich einen mit der Brennkammer verbundenen Unterstützungsarm ausbildet; und
- Figur 7: ein weiteres Beispiel eines Turbinen-Leitschaufelsegments eines Schaufelkranzes der Stufe 1 einer Hochdruckturbine, wobei das Turbinen-Leitschaufelsegment über einen nicht geschlitzten Leitschaufel-Unterstützungsring an einem Turbinengehäuse radial fixiert ist, der zusätzlich einen mit der Brennkammer verbundenen Unterstützungsarm ausbildet.

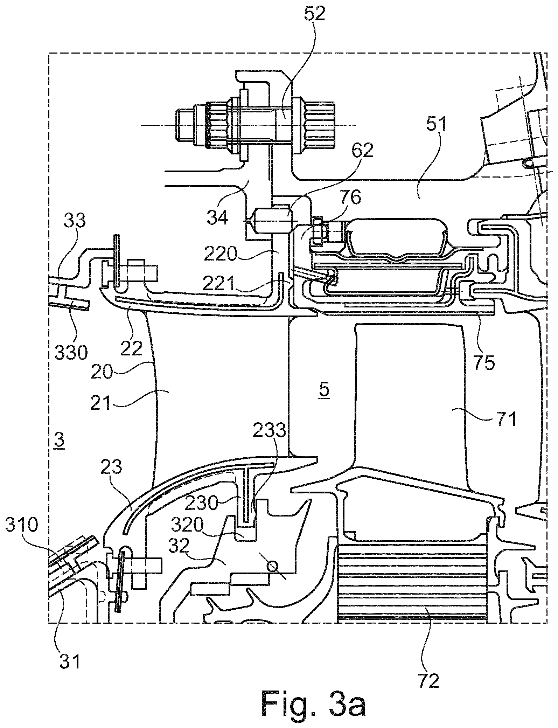

Es wird darauf hingewiesen, dass die Beispiele der Figuren 3a, 3b sowie 4-7 keine Ausführungsformen der Erfindung darstellen, sondern es sich um Beispiele handelt, die das Verständnis der Erfindung erleichtern.

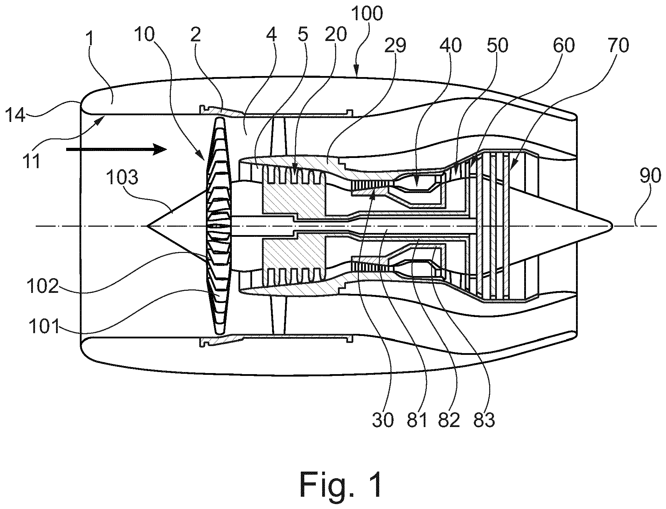

Die Figur 1 zeigt schematisch ein Turbofantriebwerk 100, das eine Fanstufe mit einem Fan 10 als Niederdruckverdichter, einen Mitteldruckverdichter 20, einen Hochdruckverdichter 30, eine Brennkammer 40, eine Hochdruckturbine 50, eine Mitteldruckturbine 60 und eine Niederdruckturbine 70 aufweist.

Der Mitteldruckverdichter 20 und der Hochdruckverdichter 30 weisen jeweils eine Mehrzahl von Verdichterstufen auf, die jeweils eine Rotorstufe und eine Statorstufe umfassen. Das Turbofantriebwerk 100 der Figur 1 weist des Weiteren drei separate Wellen auf, eine Niederdruckwelle 81, die die Niederdruckturbine 70 mit dem Fan 10 verbindet, eine Mitteldruckwelle 82, die die Mitteldruckturbine 60 mit dem Mitteldruckverdichter 20 verbindet und eine Hochdruckwelle 83, die die Hochdruckturbine 50 mit dem Hochdruckverdichter 30 verbindet. Dies ist jedoch lediglich beispielhaft zu verstehen. Wenn das Turbofantriebwerk beispielsweise keinen Mitteldruckverdichter und keine Mitteldruckturbine besitzt, wären nur eine Niederdruckwelle und eine Hochdruckwelle vorhanden.

Das Turbofantriebwerk 100 weist eine Triebwerksgondel 1 auf, die eine Einlauflippe 14 umfasst und innenseitig einen Triebwerkseinlauf 11 ausbildet, der einströmende Luft dem Fan 10 zuführt. Der Fan 10 weist eine Mehrzahl von Fan-Schaufeln 101 auf, die mit einer Fan-Scheibe 102 verbunden sind. Der Annulus der Fan-Scheibe 102 bildet dabei die radial innere Begrenzung des Strömungspfads durch den Fan 10. Radial außen wird der Strömungspfad durch ein Fangehäuse 2 begrenzt. Stromaufwärts der Fan-Scheibe 102 ist ein Nasenkonus 103 angeordnet.

Hinter dem Fan 10 bildet das Turbofantriebwerk 100 einen Sekundärstromkanal 4 und einen Primärstromkanal 5 aus. Der Primärstromkanal 5 führt durch das Kerntriebwerk (Gasturbine), das den Mitteldruckverdichter 20, den Hochdruckverdichter 30, die Brennkammer 40, die Hochdruckturbine 50, die Mitteldruckturbine 60 und die Niederdruckturbine 70 umfasst. Dabei sind der Mitteldruckverdichter 20 und der Hochdruckverdichter 30 von einem Umfangsgehäuse 29 umgeben, dass innenseitig eine Ringraumfläche bildet, die den Primärstromkanal 5 radial außen begrenzt. Radial innen ist der Primärstromkanal 5 durch entsprechende Kranzoberflächen der Rotoren und Statoren der jeweiligen Verdichterstufen bzw. durch die Nabe oder mit der Nabe verbundene Elemente der entsprechenden Antriebswelle begrenzt.

Im Betrieb des Turbofantriebwerks 100 durchströmt ein Primärstrom den Primärstromkanal 5 (nachfolgend auch als Hauptströmungskanal bezeichnet). Der Sekundärstromkanal 4, auch als Nebenstromkanal, Mantelstromkanal oder Bypass-Kanal bezeichnet, leitet im Betrieb des Turbofantriebwerks 100 vom Fan 10 angesaugte Luft am Kerntriebwerk vorbei.

Die beschriebenen Komponenten besitzen eine gemeinsame Symmetrieachse 90. Die Symmetrieachse 90 definiert eine axiale Richtung des Turbofantriebwerks. Eine radiale Richtung des Turbofantriebwerks verläuft senkrecht zur axialen Richtung.

Im Kontext der vorliegenden Erfindung ist die Ausbildung der Hochdruckturbine 50, insbesondere der ersten Stufe der Hochdruckturbine 50 von Bedeutung.

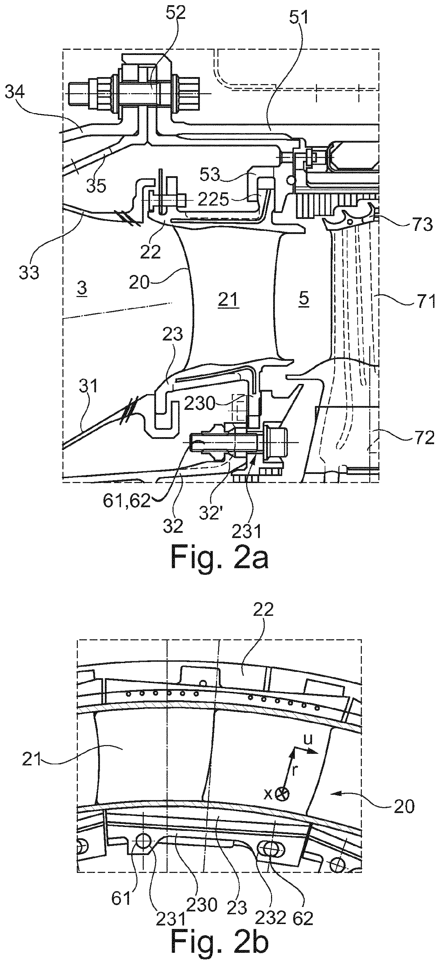

Zum besseren Verständnis der vorliegenden Erfindung wird zunächst anhand der Figuren 2a und 2b die Aufhängung von Turbinen-Leitschaufelsegmenten gemäß dem Stand der Technik beschrieben.

Die Figur 2a zeigt einen Teilabschnitt eines Hauptströmungspfads 5 durch eine Gasturbine, die Teil eines Flugtriebwerks ist. Der dargestellte Teilabschnitt zeigt den - bezogen auf die Strömungsrichtung - hinteren Abschnitt einer Brennkammer 3, ein Turbinen-Leitschaufelsegment 20 eines der Brennkammer 3 unmittelbar nachgeordneten Turbinen-Leitschaufelkranzes und eine Laufschaufel 71 eines Turbinen-Laufschaufelkranzes. Der Leitschaufelkranz und der Laufschaufelkranz bilden dabei die erste Stufe der Hochdruckturbine.

Die Brennkammer 3 weist eine radial innere Brennkammerwand 31 und eine radial äußere Brennkammerwand 33 auf. Strukturell wird die Brennkammer 3 durch ein Brennkammer-Innengehäuse 32 und ein Brennkammer-Außengehäuse 34 gehalten. Die radial äußere Brennkammerwand 33 ist dabei über eine Wandung 35 mit dem Brennkammer-Außengehäuse 34 verbunden. In entsprechender Weise ist die radial innere Brennkammerwand 31 ist über eine Wandung (nicht dargestellt) mit dem Brennkammer-Innengehäuse 32 verbunden.

Das Brennkammer-Außengehäuse 34 ist in einem Verbindungsbereich 52 beispielsweise über Schrauben mit dem Gehäuse 51 der Hochdruckturbine verbunden ist. Das Gehäuse 51 der Hochdruckturbine ist ein Außengehäuse.

Das Turbinen-Leitschaufelsegment 20 umfasst eine Leitschaufel 21, eine äußere Plattform 22, die den Hauptströmungspfad 5 radial außen begrenzt und eine innere Plattform 23, die den Hauptströmungspfad 5 radial innen begrenzt. Ein Segment 20 kann dabei eine oder mehrere Leitschaufel 21 umfassen. Die in Umfangsrichtung nebeneinander angeordneten Segmente 20 bilden zusammen den Turbinen-Leitschaufelkranz der ersten Stufe der Hochdruckturbine.

Die Laufschaufeln 71 sind in Umfangsrichtung beabstandet an einer Turbinenscheibe 72 befestigt. An ihren radial äußeren Enden sind sie mit einem Deckband 73 versehen. Die Laufschaufeln 71 bilden einen Laufschaufelkranz der ersten Stufe der Hochdruckturbine.

Die Turbinen-Leitschaufelsegmente 20 sind bezogen auf die radiale Richtung am Brennkammer-Innengehäuse 32 fixiert. Hierzu bildet die innere Plattform 23 des Segments 20 eine sich im Wesentlichen radial erstreckende Wand 230 aus, die über zwei Stifte 61, 62 an einer Struktur 32' fixiert sind, die Teil des Brennkammer-Innengehäuses 32 ist. Die Art dieser radialen Fixierung ist in der Figur 2b zu erkennen, die eine Ansicht von vorne auf ein Turbinen-Leitschaufelsegment 20 zeigt. Danach umfasst das Segment 20 im dargestellten Ausführungsbeispiel zwei Leitschaufeln 21, die sich zwischen der äußeren Plattform 22 und der inneren Plattform 23 erstrecken. Die Umfangsrichtung ist mit u, die radiale Richtung mit r und die axiale Richtung mit x gekennzeichnet.

Gemäß der Figur 2b bildet die innere Plattform 23 im Bereich der Wand 230 zum einen ein Kreisloch 231 und zum anderen ein Langloch 232 aus. In das Kreisloch 231 und das Langloch 232 ist jeweils ein Stift 61, 62 eingesteckt, der in der Struktur 32' fixiert ist. Über den Stift 62 und das Langloch 232 wird das Segment 20 nur in radialer Richtung r fixiert. Über den Stift 61 und das Kreisloch 231 wird das Segment 20 sowohl in radialer Richtung r als auch in Umfangsrichtung u fixiert. Eine Fixierung in axialer Richtung erfolgt weder über den Stift 61 noch über den Stift 62.

Eine Fixierung in axialer Richtung erfolgt dagegen über Anlageflächen an axial benachbarten Strukturen. Beispielsweise bildet das Segment 20 an der äußeren Plattform 22 eine sich in radialer Richtung erstreckende Wand 225 aus, die in einer nutartigen Struktur 53 des Außengehäuses 51 der Hochdruckturbine axial abgestützt und dabei in radialer Richtung beweglich angeordnet ist. Die Beweglichkeit in radialer Richtung ermöglicht es, durch Toleranzen oder unterschiedliche Thermaldehnungen erzeugte Zwangskräfte zu vermeiden. Die auftretenden Toleranzen können dabei relativ groß sein, da sich aufgrund der Fixierung der Turbinen-Leitschaufelsegmente 20 am Brennkammer-Innengehäuse 32 eine lange Toleranzkette ergibt, die über das Brennkammer-Innengehäuse 32 und radiale Stützen, z.B. einen Verdichteraustrittsleitkranz (nicht dargestellt), zum Brennkammer-Außengehäuse 34 und von diesem zum Außengehäuse 51 der Hochdruckturbine führt.

Ein weiterer Nachteil der in den Figuren 2a, 2b beschriebenen Ausgestaltung besteht darin, dass bei Konzepten mit Laufschaufeln 71, die anders als in der Figur 2a dargestellt ohne Deckband ausgebildet sind, eine radiale Stufe an der radial äußeren Begrenzung des Hauptströmungspfads 5 vorliegt, die nur für einen Betriebspunkt optimiert werden kann und zudem einer relativ langen Toleranzkette unterliegt. Bei Konstruktionen, bei denen es auf die genaue Umfangslage der Turbinen-Leitschaufelsegmente 20 relativ zur Brennkammer 3 oder zu anderen Strukturen der Hochdruckturbine ankommt, ist die relativ lange Toleranzkette ebenfalls ungünstig. Die aerodynamischen Kräfte in Umfangsrichtung müssen über das Brennkammer-Innengehäuse 32 und z.B. einen Verdichteraustrittsleitkranz in die Außengehäuse 34, 51 abgeleitet werden, was bei der Auslegung dieser Komponenten berücksichtigt werden muss. Schließlich ist der Bauraum im Randbereich der Turbinenscheibe 72 besonders bei kleineren Triebwerken durch die innere Aufhängung mit den Bestandteilen 230, 231, 232, 61, 62 eingeschränkt und macht eine eventuell notwendige zusätzliche Kühlung der Turbinenscheibe 72 unmöglich.

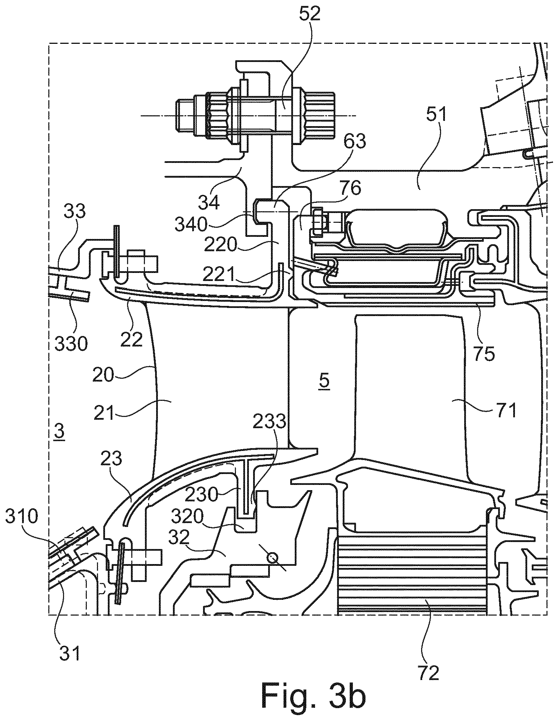

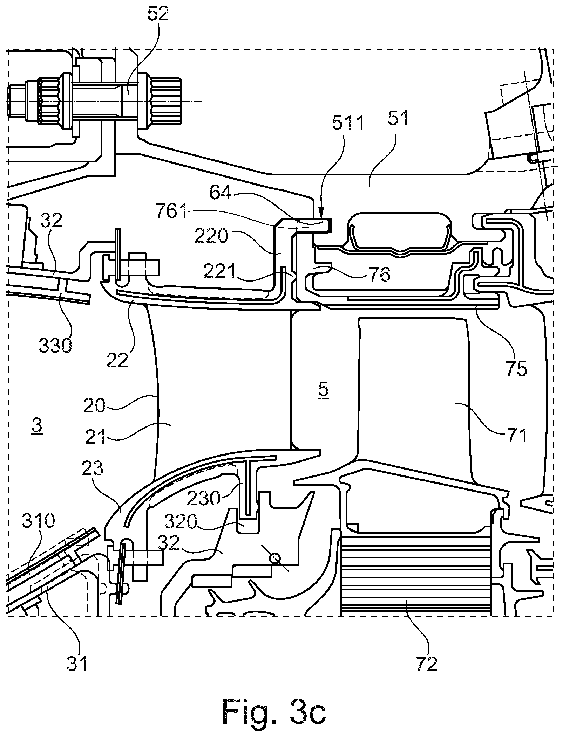

Die Figur 3a zeigt ein erstes Ausführungsbeispiel der Anordnung der Turbinen-Leitschaufelsegmente 20 im Kerntriebwerk. Die Figur 3 zeigt ebenso wie die Figur 2 einen Teilabschnitt, der den hinteren Bereich einer Brennkammer 3, ein Turbinen-Leitschaufelsegment 20 eines Leitschaufelkranzes und eine Laufschaufel 71 eines Laufschaufelkranzes umfasst. Die Brennkammer 3 umfasst eine Brennkammer-Innenwand 31 und eine Brennkammer-Außenwand 33. Die Brennkammer-Innenwand 31 ist mit Hitzeschindeln 310 und die Brennkammer-Außenwand 33 ist mit Hitzeschindeln 330 verkleidet. Strukturell wird die Brennkammer 3 vergleichbar wie in Bezug auf die Figur 2a beschrieben durch ein Brennkammer-Innengehäuse 32 und ein Brennkammer-Außengehäuse 34 gehalten.

Jedes Turbinen-Leitschaufelsegment 20 umfasst ein oder mehrere Leitschaufeln 21, eine äußere Plattform 22 und eine innere Plattform 23. Die innere Plattform 23 bildet einen sich in radialer Richtung erstreckenden Wandabschnitt 230 aus, der in eine sich ebenfalls in radialer Richtung erstreckende Aussparung 320 (z.B. eine Nut) einer Wandung des Brennkammer-Innengehäuses 32 eingreift. Der Wandabschnitt 230 bildet eine sich in Umfangsrichtung erstreckende Dichtkante 233 aus. Die sich in radialer Richtung erstreckende Aussparung 320 bildet dabei einen axialen Anschlag für die Dichtkante 233 und damit für das Turbinen-Leitschaufelsegment 20. In radialer Richtung ist der Wandabschnitt 230 gegenüber der Wandung 32 nicht fixiert.

Die äußere Plattform 22 umfasst einen sich in radialer Richtung erstreckenden Wandabschnitt 220. Dieser ist über zwei Stifte 61, 62 direkt mit dem Brennkammer-Außengehäuse 34 verbunden. Die Verbindung erfolgt dabei über ein Kreisloch und ein Langloch entsprechend der Darstellung der Figur 2b. Insofern wird auf die Ausführungen zur Figur 2b verwiesen.

Das Brennkammer-Außengehäuse 34 bildet einen Teil eines Außengehäuses der Gasturbine, das durch das Brennkammer-Außengehäuse 34 und das Turbinengehäuse 51 der Hochdruckturbine gebildet ist, wobei das Brennkammer-Außengehäuse 34 und das Turbinengehäuse 51 in dem Verbindungsbereich 52 beispielsweise über Schrauben miteinander verbunden sind. In alternativen Ausgestaltungen ist die äußere Plattform 22 direkt mit dem Turbinengehäuse 51 der Hochdruckturbine verbunden.

Es wird darauf hingewiesen, dass über die Verbindung Kreisloch - Stift das Turbinen-Leitschaufelsegment 20 auch in Umfangsrichtung fixiert ist.

Für eine axiale Fixierung des Turbinen-Leitschaufelsegments 20 im Bereich der oberen Plattform 22 und damit radial außen bezogen auf den Hauptströmungspfad 5 bildet der Wandabschnitt 220 eine Anlagefläche in Form einer sich in Umfangsrichtung erstreckenden Dichtkante 221 aus, die sich axial an einer Wand 76 einer angrenzenden Struktur abstützt. Bei dieser Struktur handelt es sich beispielsweise um eine mit dem Außengehäuse 51 der Hochdruckturbine verbundene Struktur, die der Aufnahme eines Anlaufmaterials 75 dient, das diese Struktur zum Hauptströmungspfad 5 ausbildet. So ist bei der Ausgestaltung der Figur 3 vorgesehen, dass die Laufschaufeln 71 des Laufschaufelkranzes der ersten Stufe der Hochdruckturbine ohne Deckband ausgebildet sind, so dass die Schaufelspitzen beabstandet durch einen Spalt der äußeren Strömungspfadbegrenzung gegenüber stehen. Durch Bereitstellung eines Anlaufmaterials 75, in das sich die Schaufelspitzen einarbeiten können, kann dieser Spalt minimiert werden. Die angrenzende Struktur 76 wird auch als Deckbandsegment der äußeren Hauptströmungspfadberandung bezeichnet.

Die einzelnen Laufschaufeln 71 sind am Außenumfang einer Turbinenscheibe 72 angeordnet.

Die Figur 3b zeigt ein Ausführungsbeispiel, das bis auf die Art der radialen Fixierung der Turbinen-Leitschaufelsegmente 20 am Außengehäuse dem Ausführungsbeispiel der Figur 3a entspricht. So ist beim Ausführungsbeispiel der Figur 3b vorgesehen, dass die Turbinen-Leitschaufelsegmente 20 in radialer Richtung jeweils über mindestens einen Haken 63, der an dem sich in radialer Richtung erstreckenden Wandabschnitt 220 der äußeren Plattform 22 ausgebildet ist, in einer axialen, in Umfangsrichtung umlaufenden Nut 340 im Brennkammer-Außengehäuse 34 fixiert sind. Dabei sind beispielsweise zwei Haken 63 pro Turbinen-Leitschaufelsegment 20 vorgesehen. Alternativ kann ein in Umfangsrichtung durchgehender Haken 63 vorgesehen sein.

Eine Fixierung eines Turbinen-Leitschaufelsegments 20 im Umfangsrichtung kann bei dieser Ausgestaltung über einen oder mehrere axiale Stifte erfolgen. Beispielsweise ist ein Stift in einen axialen Schlitz eingesetzt, den einer der Haken 63 ausbildet (nicht dargestellt).

In einer alternativen Ausgestaltung kann die äußere Plattform 22 über mindestens einen Haken in einer axialen Nut des Turbinengehäuses 51 der Hochdruckturbine radial fixiert sein. Hierzu zeigt die Figur 3c ein Ausführungsbeispiel, das bis auf die Art der radialen Fixierung der Turbinen-Leitschaufelsegmente 20 dem Ausführungsbeispiel der Figur 3b entspricht. Gemäß dem Ausführungsbeispiel der Figur 3c bildet der sich in radialer Richtung erstreckende Wandabschnitt 220 der äußeren Plattform 22 mindestens einen sich axial erstreckenden Haken 64 aus, der in einer axialen, in Umfangsrichtung umlaufenden Nut 511 des Turbinengehäuses 51 an diesem fixiert ist. Durch die Anordnung des Hakens 64 in der Nut 511 erfolgt eine Fixierung der Turbinen-Leitschaufelsegmente 20 in radialer Richtung direkt am Turbinengehäuse 51. Dabei sind beispielsweise zwei Haken 64 pro Turbinen-Leitschaufelsegment 20 vorgesehen. Alternativ kann ein in Umfangsrichtung durchgehender Haken 64 vorgesehen sein.

Es wird darauf hingewiesen, dass die Nut 511 des Turbinengehäuses 51 auch zur radialen Fixierung des Deckbandsegments 76 vorgesehen ist. Die Haken 64 des Turbinen-Leitschaufelsegments 20 und Haken 761 des Deckbandsegments 76 sitzen hierzu wechselweise in der Nut 511 des Turbinengehäuses. Dadurch, dass sowohl das Turbinen-Leitschaufelsegment 20 als auch das Deckbandsegment 76 in einer gemeinsamen Nut 511 des Turbinengehäuses 51 befestigt sind, werden Toleranzen zwischen diesen beiden Komponenten minimiert.

Eine Fixierung eines Turbinen-Leitschaufelsegments 20 im Umfangsrichtung kann bei der Ausgestaltung der Figur 3c über einen oder mehrere Stifte erfolgen. Ein Deckbandsegment 76 kann sich an den Seitenflächen der Haken 64 des Turbinen-Leitschaufelsegments 20 in Umfangsrichtung abstützen, wodurch auf eine separate Fixierung des Deckbandsegments 76 durch Stifte verzichtet werden kann und eine besonders effektive Ausgestaltung erreicht wird.

Bei den Ausführungsbeispielen der Figuren 3a, 3b und 3c erfolgt somit eine Fixierung der Turbinen-Leitschaufelsegmente 20 in radialer Richtung am Außengehäuse 34, 51. Dementsprechend werden auftretende radiale Lasten in das Außengehäuse 34, 51 geleitet. Dies führt dazu, dass die radialen Toleranzen der Anordnung des Turbinen-Leitschaufelsegment 20 relativ zu den angrenzenden Strukturen 75, 76 bei unterschiedlicher Thermaldehnungen deutlich reduziert sind, da sowohl das Turbinen-Leitschaufelsegment 20 als auch die angrenzenden Strukturen mit dem Außengehäuse 34, 51 verbunden sind.

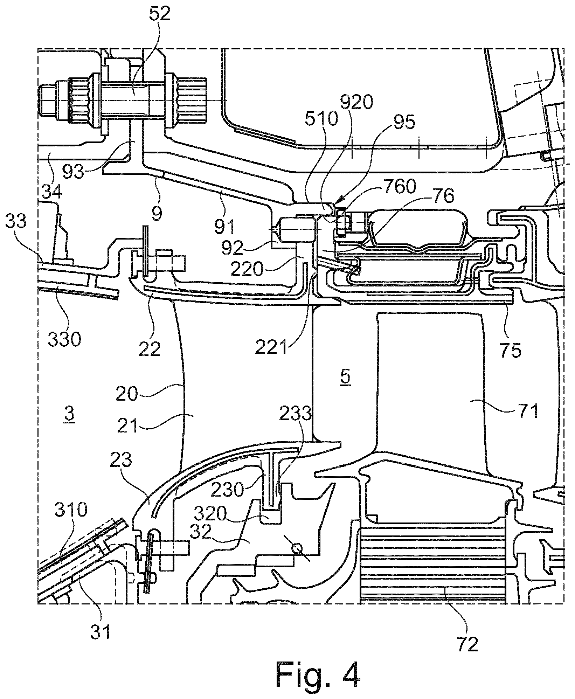

Die Figur 4 zeigt ein Ausführungsbeispiel, bei dem die Turbinen-Leitschaufelsegmente anders als bei der Figur 3 nicht direkt, sondern über eine Zwischenstruktur am Außengehäuse fixiert sind. Die Fixierung erfolgt dabei am Turbinengehäuse 51. Bei dieser Zwischenstruktur handelt es sich im dargestellten Ausführungsbeispiel um einen Leitschaufel-Unterstützungsring 9. Dieser umfasst einen ersten radialen Wandbereich 92, in dem der Leitschaufel-Unterstützungsring 9 mit dem Wandabschnitt 220 der äußeren Plattform 22 über zwei Stifte 62 in der beschriebenen Weise verbunden ist. Weiter umfasst der Unterstützungsring 9 einen zweiten radialen Wandbereich 93, mit dem der Unterstützungsring 9 im Befestigungsbereich 52 radial mit dem Turbinengehäuse 51 und auch dem Brennkammer-Außengehäuse 34 verbunden ist. Zwischen den beiden radialen Wandbereichen 92, 93 erstreckt sich schräg und damit mit einer axialen Richtungskomponente ein dritter Wandbereich 91, der die beiden radialen Bereiche 92, 93 verbindet.

Gemäß dem Ausführungsbeispiel der Figur 4 ist dabei vorgesehen, dass die Wandbereiche 91, 92 geschlitzt, d.h. mit einzelnen Schlitzen versehen und dadurch segmentiert sind. Hierdurch wird die radiale Beweglichkeit bei Auftreten radialer Verschiebungen des Außengehäuses 51 erhöht.

Dies ermöglicht es, unter allen Betriebsbedingungen, auch bei z.B. starken Thermalbewegungen des Außengehäuses 51 eine Verbindung zum Außengehäuse 51 aufrechtzuerhalten und somit die radialen Relativbewegungen zwischen dem Turbinen-Leitschaufelsegment 20 bzw. dessen äußerer Plattform 22 und den angrenzenden Strukturen 75, 76 zu minimieren.

Die Ausgestaltung der Wandbereiche 91, 92 mit Schlitzen erfolgt dabei gemäß einer vorteilhaften Ausgestaltung in Kombination mit einer Nut-Finger-Verbindung 95, wobei die äußere Wand der Nut durch eine innere Wand 510 des Außengehäuses 51 und die innere Wand der Nut durch eine Außenwand 760 der in axialer Richtung an das Turbinen-Leitschaufelsegment 20 angrenzenden Struktur 76 (Deckbandsegment) gebildet wird. Der Finger 920 der Nut-Finger-Verbindung 95 wird durch eine Wandung des ersten radialen Wandbereichs 92 gebildet, die axial in die Nut hineinragt und sich radial zwischen deren innerer und äußerer Wand erstreckt.

Über die Nut-Finger-Verbindung 95 ist der Leitschaufel-Unterstützungsring 9 mit dem Außengehäuse 51 in radialer Richtung fixiert. Hierdurch wird eine radiale Fixierung des Leitschaufel-Unterstützungsrings 9 zum Außengehäuse 51 bereitgestellt, wodurch radiale Relativbewegungen zwischen Turbinen-Leitschaufelsegment 20 und der daran in axialer Richtung angrenzenden Struktur minimiert werden.

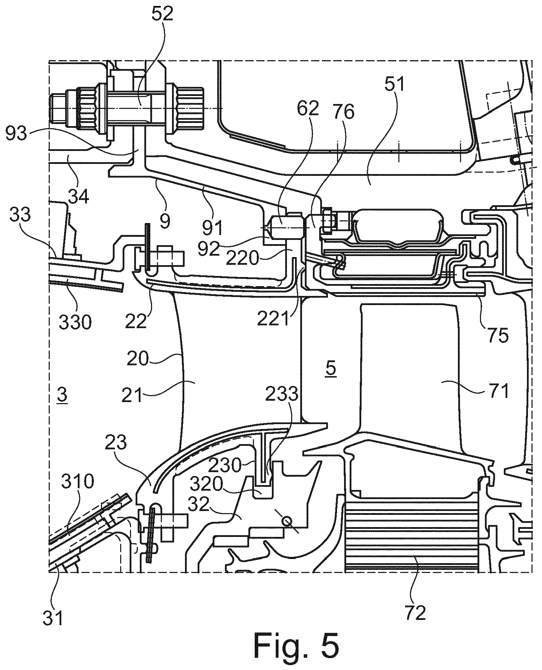

Die Figur 5 zeigt ein weiteres Ausführungsbeispiel, das sich von dem Ausführungsbeispiel der Figur 4 in der Ausgestaltung der Wandbereiche 91, 92 des Leitschaufel-Unterstützungsrings 9 unterscheidet. Während diese Wandbereiche 91, 92 bei dem Ausführungsbeispiel der Figur 4 geschlitzt ausgebildet sind, sind sie im Ausführungsbeispiel der Figur 5 nicht mit Schlitzen versehen. Des Weiteren ist eine Nut-Finger-Verbindung entsprechend der Nut-Finger-Verbindung 95 der Figur 4 nicht vorhanden. Es werden geringe radiale Relativbewegungen zwischen den Leitschaufelsegmenten 20 und den axial daran angrenzenden Strukturen wie den Strukturen 75, 76 erlaubt.

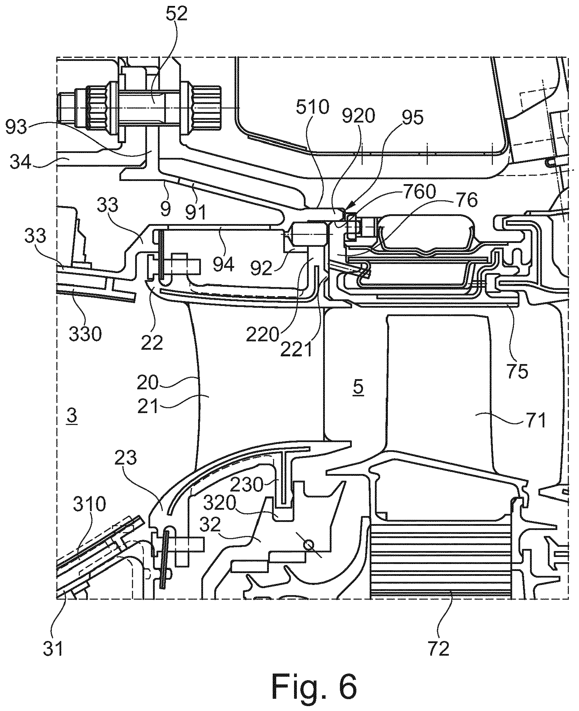

Die Figur 6 zeigt ein weiteres Ausführungsbeispiel, bei dem die Turbinen-Leitschaufelsegmente 20 nicht direkt, sondern über eine Zwischenstruktur 9 am Turbinengehäuse 51 fixiert sind. Die Zwischenstruktur 9 umfasst zum einen einen Leitschaufel-Unterstützungsring 9 entsprechend der Figur 4. Zusätzlich ist ein Brennkammer-Unterstützungsarm 94 vorgesehen, der mit der Brennkammer-Außenwand 33 der Brennkammer 3 verbunden ist. Der Brennkammer-Unterstützungsarm 94 geht dabei von dem ersten radialen Bereich 92 des Unterstützungsrings 9 aus.

Durch Bereitstellung eines Brennkammer-Unterstützungsarms 94 wird in einfacher Weise eine Fixierung der Brennkammer-Außenwand 33 bereitgestellt, ohne dass hierfür zusätzliche Komponenten bereitgestellt werden müssen. Dabei kann vorgesehen sein, dass der Brennkammer-Unterstützungsarm 94 ebenso wie der Wandbereich 91 und der radiale Bereich 92 mit Schlitzen versehen ist, um radiale Relativbewegungen besser aufnehmen zu können.

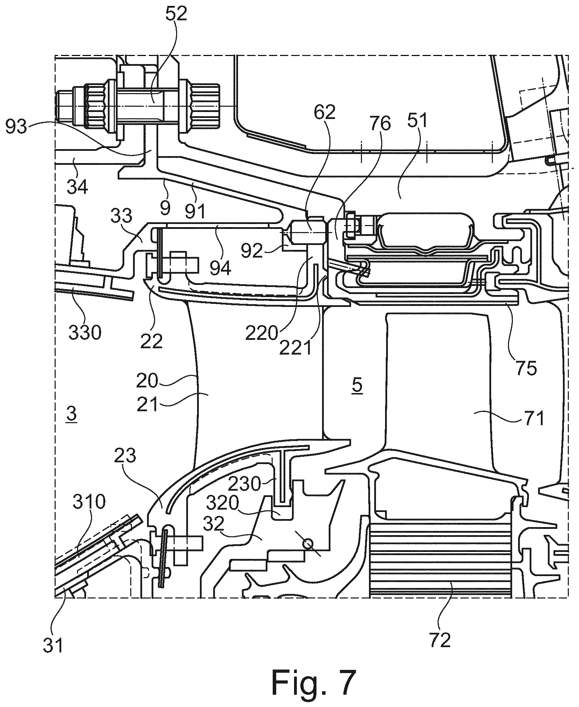

Die Figur 7 zeigt ein Ausführungsbeispiel, das bis auf den Umstand dem Ausführungsbeispiel der Figur 6 entspricht, dass der Wandbereich 91 und der radiale Bereich 92 - ebenso wie bei der Figur 5 - nicht geschlitzt, sondern durchgehend ausgebildet ist.

Die vorliegende Erfindung wird durch die angefügten Ansprüche definiert. Beispielsweise wird darauf hingewiesen, dass die konkrete Form und Ausgestaltung der Leitschaufeln 21, der äußeren Plattform 22 und der inneren Plattform 23 lediglich beispielhaft zu verstehen ist.

## Patentansprüche

1. Gasturbine, die aufweist:
- eine Brennkammer (3),
- eine Hochdruckturbine mit einem der Brennkammer (3) nachgeordneten ersten Turbinen-Leitschaufelkranz, wobei der erste Turbinen-Leitschaufelkranz eine Mehrzahl von Turbinen-Leitschaufelsegmenten (20) aufweist, die jeweils mindestens eine Leitschaufel (21), eine äußere Plattform (22) und eine innere Plattform (23) umfassen, und
- ein Außengehäuse (51, 34), wobei das Außengehäuse durch ein Turbinengehäuse (51) der Hochdruckturbine und ein Brennkammer-Außengehäuse (34) der Brennkammer (3) gebildet ist, die miteinander verbunden sind,
- wobei das Turbinengehäuse (51) eine axiale Nut (511 umfasst,
wobei die Turbinen-Leitschaufelsegmente (20) in radialer Richtung am Außengehäuse (51, 34) fixiert sind, wobei auftretende radiale Lasten in das Außengehäuse (51, 34) geleitet werden,
und eine Struktur (76), die stromabwärts des ersten Turbinen-Leitschaufelkranzes die äußere Begrenzung des Hauptströmungspfads (5) für die Laufschaufeln (71) eines dem ersten Turbine-Leitschaufelkranz nachgeordneten ersten Turbinen-Laufschaufelkranzes bereitstellt,
wobei die Turbinen-Leitschaufelsegmente (20) jeweils über mindestens einen Haken (64), der in der axialen Nut (511) des Turbinengehäuses (51) angeordnet ist, in radialer Richtung am Turbinengehäuse (51) fixiert sind, **dadurch gekennzeichnet, dass** die Nut (511) des Turbinengehäuses (51) des Weiteren der radialen Fixierung der Struktur (76) dient, die stromabwärts des ersten Turbinen-Leitschaufelkranzes die äußere Begrenzung des Hauptströmungspfads (5) für die Laufschaufeln (71) eines dem ersten Turbinen-Leitschaufelkranz nachgeordneten ersten Turbinen-Laufschaufelkranzes bereitstellt.

2. Gasturbine nach Anspruch 1, **dadurch gekennzeichnet, dass** die Turbinen-Leitschaufelsegmente (20) in axialer Richtung sowohl am Außengehäuse (51, 34) als auch an einem Brennkammer-Innengehäuse (32) abgestützt sind, wobei auftretende axiale Lasten sowohl in das Außengehäuse (51, 34) als auch in das Brennkammer-Innengehäuse (32) geleitet werden.

3. Gasturbine nach Anspruch 1 oder 2, **dadurch gekennzeichnet, dass** ein Turbinen-Leitschaufelsegment (20) an seiner äußeren Plattform (22) sich axial an der Struktur (76) abstützt, die die äußere Begrenzung des Hauptströmungspfads (5) für die Laufschaufeln (71) eines dem ersten Turbinen-Leitschaufelkranz nachgeordneten ersten Turbinen-Laufschaufelkranzes bereitstellt.

4. Gasturbine nach einem der vorangehenden Ansprüche, **dadurch gekennzeichnet, dass** die Turbinen-Leitschaufelsegmente (20) in radialer Richtung und in Umfangsrichtung am Außengehäuse (51, 34) fixiert sind, wobei auftretende radiale und tangentiale Lasten in das Außengehäuse (51, 34) geleitet werden.

5. Gasturbine nach einem der vorangehenden Ansprüche, **dadurch gekennzeichnet, dass** die Struktur (76), die stromabwärts des ersten Turbinen-Leitschaufelkranzes die äußere Begrenzung des Hauptströmungspfads (5) für die Laufschaufeln (71) eines dem ersten Turbinen-Leitschaufelkranz nachgeordneten ersten Turbinen-Laufschaufelkranzes bereitstellt, als Deckbandsegment der äußeren Hauptströmungspfadberandung ausgebildet ist.

6. Gasturbine nach Anspruch 5, **dadurch gekennzeichnet, dass** Haken (64) des Turbinen-Leitschaufelsegments (20) und Haken (761) des Deckbandsegments (76) wechselweise in der Nut (511) des Turbinengehäuses (51) sitzen.

7. Gasturbine nach Anspruch 5 oder 6, **dadurch gekennzeichnet, dass** das Deckbandsegment (76) zum Hauptströmungspfad (5) ein Anlaufmaterial aufweist.

8. Gasturbine nach einem der Ansprüche 5 bis 7, **dadurch gekennzeichnet, dass** eine Fixierung eines Turbinen-Leitschaufelsegments (20) im Umfangsrichtung über einen oder mehrere Stifte erfolgt.

9. Gasturbine nach einem der Ansprüche 5 bis 8, **dadurch gekennzeichnet, dass** eine Fixierung eines Deckbandsegments (76) im Umfangsrichtung dadurch erfolgt, dass das Deckbandsegment (76) sich an den Seitenflächen der Haken (64) des Turbinen-Leitschaufelsegments (20) in Umfangsrichtung abstützt.

10. Gasturbine nach einem der vorangehenden Ansprüche, **dadurch gekennzeichnet, dass** die Hochdruckturbine einen dem ersten Turbinen-Leitschaufelkranz nachgeordneten ersten Laufschaufelkranz aufweist, wobei die Laufschaufeln (71) des Laufschaufelkranzes ohne Deckband ausgebildet sind.

## Claims

1. Gas turbine which has:
- a combustion chamber (3),
- a high-pressure turbine with a first turbine guide blade ring arranged downstream of the combustion chamber (3), wherein the first turbine guide blade ring has a plurality of turbine guide blade segments (20) which each comprise at least one guide blade (21), an outer platform (22) and an inner platform (23), and
- an outer housing (51, 34), wherein the outer housing is formed by a turbine housing (51) of the high-pressure turbine and a combustion-chamber outer housing (34) of the combustion chamber (3), which housings are connected to each other,
- wherein the turbine housing (51) comprises an axial groove (511), wherein the turbine guide blade segments (20) are fixed in the radial direction on the outer housing (51, 34), wherein radial loads which occur are conducted into the outer housing (51, 34), and a structure (76) which, downstream of the first turbine guide blade ring, provides the outer boundary of the main flow path (5) for the moving blades (71) of a first turbine moving blade ring arranged downstream of the first turbine guide blade ring,
wherein the turbine guide blade segments (20) are each fixed in the radial direction on the turbine housing (51) via at least one hook (64) which is arranged in the axial groove (511) of the turbine housing (51),
**characterized in that** the groove (511) of the turbine housing (51) furthermore serves for radially fixing the structure (76) which, downstream of the first turbine guide blade ring, provides the outer boundary of the main flow path (5) for the moving blades (71) of a first turbine moving blade ring arranged downstream of the first turbine guide blade ring.

2. Gas turbine according to Claim 1, **characterized in that** the turbine guide blade segments (20) are supported in the axial direction both on the outer housing (51, 34) and on a combustion-chamber inner housing (32), wherein axial loads which occur are conducted both into the outer housing (51, 34) and into the combustion-chamber inner housing (32).

3. Gas turbine according to Claim 1 or 2, **characterized in that** a turbine guide blade segment (20) is supported at its outer platform (22) axially on the structure (76) which provides the outer boundary of the main flow path (5) for the moving blades (71) of a first turbine moving blade ring arranged downstream of the first turbine guide blade ring.

4. Gas turbine according to one of the preceding claims, **characterized in that** the turbine guide blade segments (20) are fixed in the radial direction and in the circumferential direction on the outer housing (51, 34), wherein radial and tangential loads which occur are conducted into the outer housing (51, 34).

5. Gas turbine according to one of the preceding claims, **characterized in that** the structure (76) which, downstream of the first turbine guide blade ring, provides the outer boundary of the main flow path (5) for the moving blades (71) of a first turbine moving blade ring arranged downstream of the first turbine guide blade ring is designed as a shroud segment of the outer main flow path edge.

6. Gas turbine according to Claim 5, **characterized in that** hooks (64) of the turbine guide blade segment (20) and hooks (761) of the shroud segment (76) sit in an alternating manner in the groove (511) of the turbine housing (51).

7. Gas turbine according to Claim 5 or 6, **characterized in that** the shroud segment (76) has a starting material with respect to the main flow path (5).

8. Gas turbine according to one of Claims 5 to 7, **characterized in that** a turbine guide blade segment (20) is fixed in the circumferential direction via one or more pins.

9. Gas turbine according to one of Claims 5 to 8, **characterized in that** a shroud segment (76) is fixed in the circumferential direction by the fact that the shroud segment (76) is supported in the circumferential direction on the side surfaces of the hooks (64) of the turbine guide blade segment (20).

10. Gas turbine according to one of the preceding claims, **characterized in that** the high pressure turbine has a first moving blade ring arranged downstream of the first turbine guide blade ring, wherein the moving blades (71) of the moving blade ring are formed without a shroud.

## Revendications

1. Turbine à gaz, qui comprend :
- une chambre de combustion (3),
- une turbine haute pression munie d'une première couronne d'aubes directrices de turbine agencée en aval de la chambre de combustion (3), la première couronne d'aubes directrices de turbine comprenant une pluralité de segments d'aubes directrices de turbine (20), qui comprennent chacun au moins une aube directrice (21), une plateforme extérieure (22) et une plateforme intérieure (23), et
- un boîtier extérieur (51, 34), le boîtier extérieur étant formé par un boîtier de turbine (51) de la turbine haute pression et un boîtier extérieur de chambre de combustion (34) de la chambre de combustion (3), qui sont reliés l'un avec l'autre,
- le boîtier de turbine (51) comprenant une rainure axiale (511),
les segments d'aubes conductrices de turbine (20) étant fixés dans la direction radiale sur le boîtier extérieur (51, 34), des charges radiales qui se produisent étant dirigées dans le boîtier extérieur (51, 34),
et une structure (76), qui établit en aval de la première couronne d'aubes directrices de turbine la limite extérieure du chemin d'écoulement principal (5) pour les aubes motrices (71) d'une première couronne d'aubes motrices de turbine agencée en aval de la première couronne d'aubes conductrices de turbine,
les segments d'aubes conductrices de turbine (20) étant chacun fixés par l'intermédiaire d'au moins un crochet (64), qui est agencé dans la rainure axiale (511) du boîtier de turbine (51), dans la direction radiale sur le boîtier de turbine (51),
**caractérisée en ce que**
la rainure (511) du boîtier de turbine (51) sert en outre à la fixation radiale de la structure (76), qui établit en aval de la première couronne d'aubes conductrices de turbine la limite extérieure du chemin d'écoulement principal (5) pour les aubes motrices (71) d'une première couronne d'aubes motrices de turbine agencée en aval de la première couronne d'aubes conductrices de turbine.

2. Turbine à gaz selon la revendication 1, **caractérisée en ce que** les segments d'aubes conductrices de turbine (20) s'appuient dans la direction axiale aussi bien sur le boîtier extérieur (51, 34) que sur un boîtier intérieur de chambre de combustion (32), des charges axiales qui se produisent étant dirigées aussi bien dans le boîtier extérieur (51, 34) que dans le boîtier intérieur de chambre de combustion (32).

3. Turbine à gaz selon la revendication 1 ou 2, **caractérisée en ce qu'**un segment d'aube conductrice de turbine (20) s'appuie axialement sur sa plateforme extérieure (22) sur la structure (76), qui établit la limite extérieure du chemin d'écoulement principal (5) pour les aubes motrices (71) d'une première couronne d'aubes motrices de turbine agencée en aval de la première couronne d'aubes conductrices de turbine.

4. Turbine à gaz selon l'une quelconque des revendications précédentes, **caractérisée en ce que** les segments d'aubes conductrices de turbine (20) sont fixés dans la direction radiale et dans la direction circonférentielle sur le boîtier extérieur (51, 34), des charges radiales et tangentielles qui se produisent étant dirigées dans le boîtier extérieur (51, 34).

5. Turbine à gaz selon l'une quelconque des revendications précédentes, **caractérisée en ce que** la structure (76), qui établit en aval de la première couronne d'aubes directrices de turbine la limite extérieure du chemin d'écoulement principal (5) pour les aubes motrices (71) d'une première couronne d'aubes motrices de turbine agencée en aval de la première couronne d'aubes conductrices de turbine, est configurée sous la forme d'un segment de bande de recouvrement de la bordure extérieure du chemin d'écoulement principal.

6. Turbine à gaz selon la revendication 5, **caractérisée en ce qu'**un crochet (64) du segment d'aube conductrice de turbine (20) et un crochet (761) du segment de bande de recouvrement (76) reposent en alternance dans la rainure (511) du boîtier de turbine (51) .

7. Turbine à gaz selon la revendication 5 ou 6, **caractérisée en ce que** le segment de bande de recouvrement (76) pour le chemin d'écoulement principal (5) comprend un matériau de démarrage.

8. Turbine à gaz selon l'une quelconque des revendications 5 à 7, **caractérisée en ce qu'**une fixation d'un segment d'aube conductrice de turbine (20) dans la direction circonférentielle a lieu par l'intermédiaire d'une ou de plusieurs goupilles.

9. Turbine à gaz selon l'une quelconque des revendications 5 à 8, **caractérisée en ce qu'**une fixation d'un segment de bande de recouvrement (76) dans la direction circonférentielle a lieu **en ce que** le segment de bande de recouvrement (76) s'appuie sur les surfaces latérales du crochet (64) du segment d'aube conductrice de turbine (20) dans la direction circonférentielle.

10. Turbine à gaz selon l'une quelconque des revendications précédentes, **caractérisée en ce que** la turbine haute pression comprend une première couronne d'aubes motrices agencée en aval de la première couronne d'aubes conductrices de turbine, les aubes motrices (71) de la couronne d'aubes motrices étant configurées sans bande de recouvrement.
